# EUROPEAN PATENT APPLICATION

(11) **EP 1 602 602 A1**
(43) Date of publication of application: **07.12.2005**
(21) Application number: 05010724.2
(22) Date of filing: 18.05.2005
(51) Int. Cl.: B65G 47/14, B07C 5/00, G01N 21/00

(54) **Screw inspecting device**

(30) Priority: 01.06.2004 CN 200420064351 U
(71) Applicant: Aerser International Co. Ltd., Taipei Taiwan (TW)
(72) Inventor: Kuo, Jimmy, Kaohsiung City (TW)
(74) Representative: Meyer, Ludgerus

(57) **Abstract**

A screw detecting machine comprises a vibration disk, a screw conveying channel, a transmission device and several detectors, and is applicable to detecting screws by arranging under vibration screws that are conveyed onto the vibration disk, conveying said screws by the screw conveying channel to the transmission device and detecting them by said several detectors, wherein said transmission device is composed of two parallel strip-like bodies driven by a motor, and wherein said two parallel strip-like bodies are provided below said screw conveying channel, thereby as said screws are conveyed on said screw conveying channel to ends of said screw conveying channel, said screw can drop directly on a gap between said two parallel strip-like bodies, and moves forwardly through being hold by said two parallel strip-like bodies.

## Description

### BACKGROUND OF THE INVENTION

### 1. Field of the invention

The invention relates to a screw detecting machine, and more particularly to a screw detecting machine consisting of a transmission device that is composed of two parallel strip-like bodies driven by means of a motor, thereby screws to be detected can be hold and detected, replacing current way of detecting by means of a rotation disk. The machine can lower greatly the production cost, can increase the accuracy by preventing from wobbling and is applicable to using as a plant equipment for detecting the quality of screws.

### 2. Description of the prior art

A variety of instruments and technologies have been used widely in the industry to perform non-destructive test tasks in order to find out the intrinsic or potential defects of a product so as to achieve a safer and more reliable extent of the product and the equipment. By "the product and the equipment", a very wide range is encompassed, ranges from a small part such as screw to large equipment such as a heat exchanger, a pressure vessel, a boiler, a building, a bridge, a steamer, an airplane, a cement machinery, an oil drilling equipment, a petroleum chemical equipment, a metallurgic equipment, a nuclear power equipment and the like, that have to be subjected to a non-destructive test.

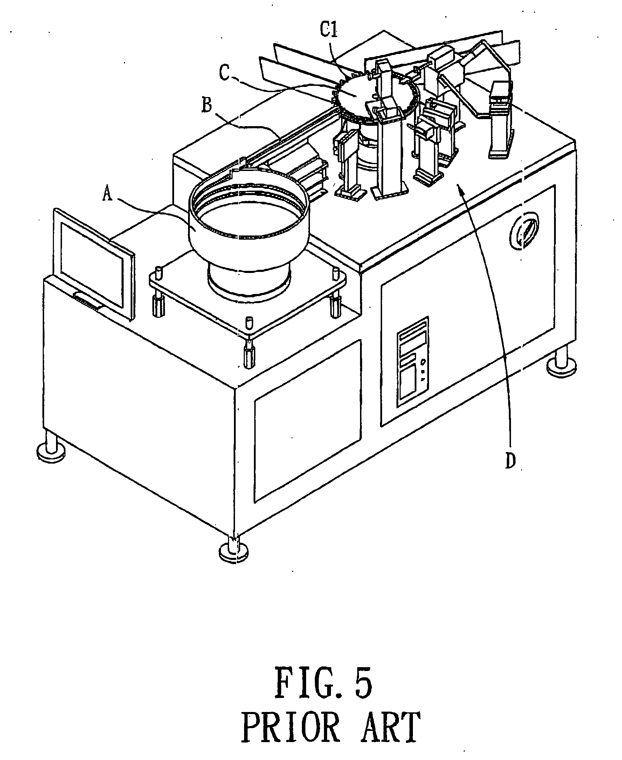

A conventional quality screening for a screw must be carried out manually that is extremely time-consumptive and is not accurate. As shown in Fig. 5, the modern industry has developed a machine for testing quality of materials. Such machine mostly comprises a vibration disk A, conveying orbital B, rotation disk C, and several detectors D. As the screw to be detected is conveyed from the vibration disk A to the rotation disk C by the conveying orbital B, each screw to be detected will be located individually in each of a plurality of positioning holes C1 provided at interval along the peripheral edge of the rotation disk C. Whereas detectors D are installed at interval around the rotation disk C in a manner that, as the rotation disk C rotates, screw located in the positioning hole C1 will be detected by the respective detector D. Finally, screws detected will be packaged separately in accordance with their quality.

Although the modern detecting machines can achieve the purpose of screw detecting and screening, however, there are following disadvantages in their practical uses:
1. Since the rotation speed of the rotation disk C must fit the moving speed of screws conveyed by the vibration disk A and the conveying orbital B and the vibration of the vibration disk A is difficult to control, at the moment the screw reaches the rotation disk C, if the rotation disk C misses the right position, the screw may be seized between the rotation disk C and the conveying orbital B. Consequently, in mild case, the screw will be plopped off, while in serious case, the rotation disk C might be damaged or the whole machine might be shut down.
2. A conventional rotation disk D is provided positioning holes C1 for holding screws, however, under the influence of the vibration from the vibration disk A, the position of each screw after it is hold might be deviated and hence might affect the accuracy of the detecting.
3. The conventional technique achieves the detecting purpose by positioning the screw on the rotation disk C and then rotating the rotation disk C. Since there are a variety of sizes among various screws, the size of the positioning hole C1 on the rotation disk C must match fit the respective size of the screw, and therefore, the same type of the screw can be adapted to only one rotation disk C. As the result, to detect a screw of other size, another rotation disk C must be replaced, and therefore, not only the production cost is increased, but also a rotation disk C has to be replaced during the practical use, of course, which incurs inconvenience.

The inventor has recognized the disadvantages such as the inconveniences and the high cost in performing and operating the conventional screw detecting machine that utilizes a rotation disk to convey the screw, and finally, after studying intensively to improve it, had accomplish the screw detecting machine according to the invention.

### SUMMARY OF THE INVENTION

The main objective of the invention is to provide a screw detecting machine characterized in that it has a simple structure and low cost, and can lower the effect of the vibration, thereby increases the accuracy of the screw detecting.

Another objective of the invention is to provide a screw detecting machine characterized in that it can be adapted immediately to the sizes of various type of screws.

In order to achieve the above-described objectives, the invention provides a screw detecting machine comprising a vibration disk, a screw conveying channel, a transmission device and several detectors, and operates for detecting the screw by arranging under vibration screws that are conveyed onto the vibration disk, conveying said screws by the conveying channel to the transmission device and detecting said screws by said several detectors. The practice of the screw detecting machine according to the invention comprises, after arranging under vibration screws conveyed on the vibration disk, transferring those screws to the transmission device through the screw conveying channel and detecting them with several detectors. The invention is characterized in that the transmission device is composed of two parallel strip-like bodies driven by a motor, wherein said two parallel strip-like bodies are provided below said screw conveying channel.

Thus, as the screw on the screw conveying channel has been moved to the end of the screw conveying channel, the screw can drop straight onto the interval between those two parallel strip-like bodies, thereby moves forwardly through entrained by those two parallel strip-like bodies.

The invention can be more deeply understood by way of an example described in more detailed below.

### BRIEF DESCRIPTION OF THE DRAWINGS

These features and advantages of the present invention will be fully understood and appreciated from the following detailed description of the accompanying Drawings.
Figure 1 is a 3-dimensional perspective view of a screw detecting machine according to an embodiment of the invention.
Figure 2 is a partial top view of a screw detecting machine according to an embodiment of the invention.
Figure 3 is a partial side view of a screw detecting machine according to an embodiment of the invention.
Figure 4 is a schematic partial top view showing dropping of a screw onto a collecting rack after detecting according to an embodiment of the invention.
Figure 5 is a 3-dimensional perspective view of a conventional screw detecting machine.

### DETAILED DESCRIPTION OF THE PREFERRED EMBODIMENT

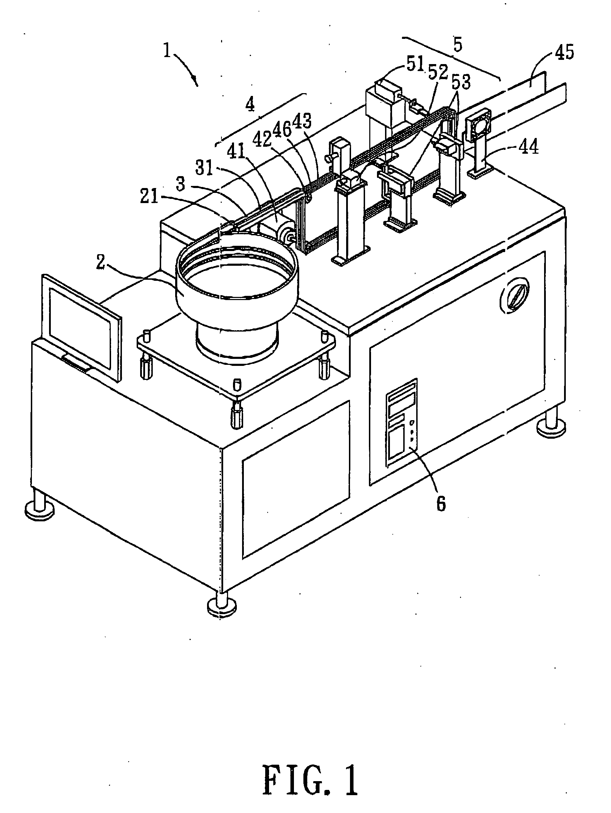

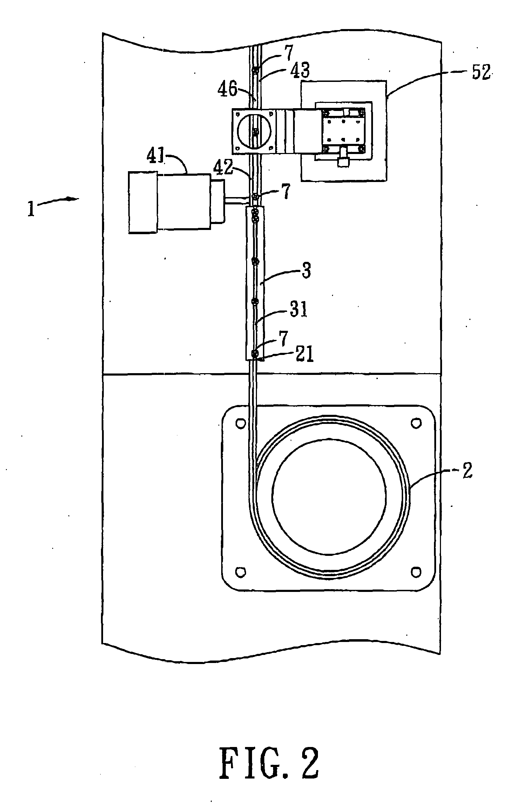

Referring to Figs. 1 and 2, a screw detecting machine 1 according to the invention comprises a vibration disk 2, a screw conveying channel 3, a transmission device 4 and several detectors 5, wherein the actuation, operation and shutdown of those various components is controlled by a computer 6.

Said vibration disk 2 is used to support and arrange screws 7 to be detected output from a collection tank, wherein an inlet 21 is provided on said vibration disk 2.

Said screw conveying channel 3 is connected to said inlet 21 of said vibration disk 2, and is provided thereon a groove 31 for conveying said screws 7 to be detected.

Said transmission device 4 is composed of two parallel strip-like bodies 42, 43 driven by a motor 41, wherein said two parallel strip-like bodies 42, 43 are positioned underneath said screw conveying channel 3, and there is a gap 46 therebetween. Said strip-like bodies 42, 43 can be a linear body, a belt or a washer, depending on the need in use. Further, Said strip-like bodies 42, 43 can be provided as a whole on the machine or with half body of them protruding out of the machine (not shown in the Figure) depending on the configuration of the machine. A pneumatic valve 44 is provided on the ends of those strip-like bodies 42, 43 and is used to blow the certified screws 7 into a collecting tank as soon as said screws 7 dropping from ends of strip-like bodies 42, 43. A collecting rack 45 is provided below ends of those strip-like bodies 42, 43 for collecting unqualified screws 7 dropping from the transmission device 4 into another collecting tank. The purpose of this rejection design resides on, when the pneumatic valve 44 is brokendown, the certified screw can be classified into unqualified product while there is no way for unqualified product to contaminate the certified product, in order to assure the consistency of the certified product.

Said detectors 5 is located separately over two sides of the transmission device 4, thereby as the transmission device 4 rotates, screws 7 thereon can be detected by every detector 5. Said detector 5 comprises a pinhole depth detector 51, for detecting the depth of a pinhole in a screw 7; a vertical image sensor 52, for detecting the size, appearance and color of the top of a screw 7; and two side view detectors 53, for detecting the size, appearance and color on the side of a screw 7.

Thereby, the screw 7 on the screw conveying channel 3 is moved to the end of the screw conveying channel 3, and then they can drop directly on the gap 46 between those two parallel strip-like bodies 42, 43 and is entrained and moves forwardly by these two parallel strip-like bodies 42, 43 to be detected by several detectors 5 provided over two sides of the transmission device 4.

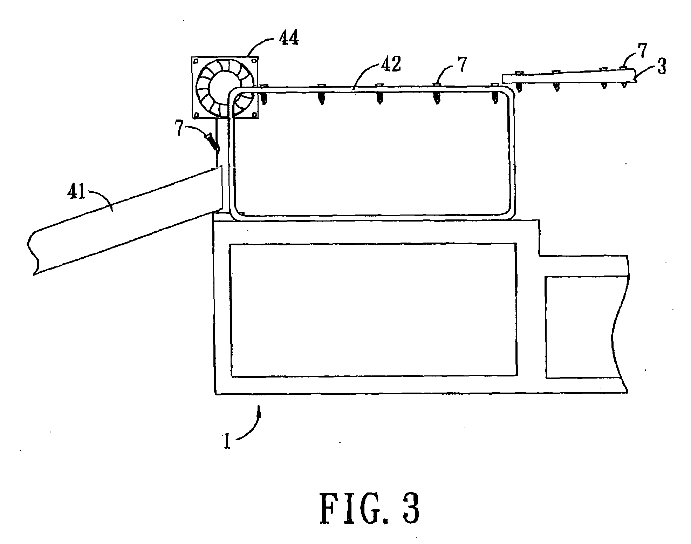

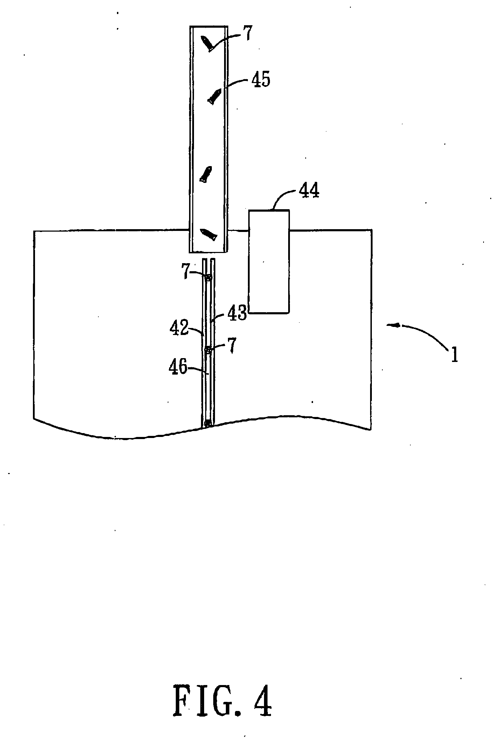

Referring again to Figs. 1-4, in practice, standards for each detect standards and detecting items are set in a computer 6 at first, and the detecting machine is then activated, here screws 7 to be detected in the vibration disk 2 are arranged and conveyed successively to the screw conveying channel 3, and through the groove 31 on the screw conveying channel 3, screws 7 are conveyed one by one to the end of the screw conveying channel 3. Since said two parallel strip-like bodies 42, 43 are provided below the screw conveying channel 3, the screw 7 to be detected can drop right on the gap 46 between two parallel strip-like bodies 42, 43 (as shown in Figs. 2 and 3), while the top of the screw 7 to be detected can be hold by said two parallel strip-like bodies 42, 43, and can move forwardly by driving said two parallel strip-like bodies 42, 43 with a motor 41.

Furthermore, since said several detectors 5 are provided over two sides of said two parallel strip-like bodies 42, 43, as the transmission device 4 rotates, screws 7 thereon can pass every detector 5 to be subjected to various detects such as depth of the pinhole, the appearance, the color and the size. Unqualified screw 7 will drop directly from ends of the two parallel strip-like bodies 42, 43 into a collecting rack 45, and is then conveyed to a collecting tank (not shown in the Figure). Whereas the certified screw 7 will be blown to another collecting tank (not shown in the Figure) by activating a pneumatic valve 44 when the screw 7 drops from ends of two parallel strip-like bodies 42, 43.

Accordingly, the invention exhibits advantages as follows:
1. The screw detecting machine takes advantage of a transmission device composed of two parallel strip-like bodies, thereby exhibits a simple structure. The machine is space saving and is convenient to use. Screws to be detected drop directly onto the gap between said two parallel strip-like bodies, which can lower the deviation caused by vibration, and hence can improve effectively the accuracy of the product, and gives a solution to the problem caused by seizing the screw associated with the prior art technique.
2. The invention screw detecting machine drives the two parallel strip-like bodies with a motor replacing the configuration of detecting by rotating a rotation disk in the conventional technique, wherein said gap between said two parallel strip-like bodies can be adjusted according to the specification of various screws, without change of rotation disk as in the prior art technique, and hence not only is convenient, but also can lower largely the cost of production facility.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A screw detecting machine comprises a vibration disk, a screw conveying channel, a transmission device and several detectors, and is applicable to detecting screws by arranging under vibration screws that are conveyed onto the vibration disk, conveying said screws by the screw conveying channel to the transmission device and detecting them by said several detectors, **characterized in that** the transmission device is composed of two parallel strip-like bodies driven by a motor, wherein said two parallel strip-like bodies are provided below said screw conveying channel, thereby as said screws are conveyed on said screw conveying channel to ends of said screw conveying channel, said screws can drop directly on a gap between said two parallel strip-like bodies, and moves forwardly through being hold by said two parallel strip-like bodies.

2. A screw detecting machine as in claim 1, wherein said gap between said two parallel strip-like bodies can be adjusted in accordance with the specification of the screw.

3. A screw detecting machine as in claim 1, wherein said strip-like bodies are linear bodies.

4. A screw detecting machine as in claim 1, wherein said strip-like bodies are belts.

5. A screw detecting machine as in claim 1, wherein said strip-like bodies are washers.

6. A screw detecting machine as in claim 1, wherein a pneumatic valve is provided further at the ends of said strip-like bodies, said pneumatic valve is used to blow the certified screws into a collecting tank as the screws drop from the end of said transmission device, and wherein a collecting rack is provided at the ends of said strip-like bodies for collecting unqualified screws dropping from said transmission device into another collecting tank.

7. A screw detecting machine as in claim 1, wherein the actuation, operation and shutdown of said various components is controlled by a computer.

8. A screw detecting machine as in claim 1, wherein said several detectors are provided over two sides of said transmission device such that as said transmission device rotates, screws thereon can be detected by each detector.

9. A screw detecting machine as in claim 1, wherein said several detectors comprise a pinhole depth detector, for detecting the depth of pinholes on the screw; a vertical image sensor, for detecting the size, appearance and color of the top of the screw; two side view detectors, for detecting the size, appearance and color of the side of the screw.

10. A screw detecting machine as in claim 1, wherein said vibration disk is used to support and arrange screws to be detected conveyed out of a collecting tank, wherein said vibration disk is provided an inlet and wherein said screw conveying channel is connected to said inlet of the vibration disk and is provided with grooves for conveying screws to be detected.
